# EUROPÄISCHE PATENTSCHRIFT

(11) **EP 1 781 520 B1**
(45) Veröffentlichungstag und Bekanntmachung des Hinweises auf die Patenterteilung: **03.12.2008**
(21) Anmeldenummer: 05774353.6
(22) Anmeldetag: 24.08.2005
(51) Int. Cl.: B60W 10/10, B60W 10/04

(54) **ANTRIEBSSTRANG EINES KRAFTFAHRZEUGS**
DRIVE TRAIN OF A MOTOR VEHICLE
CHAINE CINEMATIQUE D'UN VEHICULE AUTOMOBILE

(30) Priorität: 26.08.2004 DE 102004041264
(43) Veröffentlichungstag der Anmeldung: 09.05.2007
(73) Patentinhaber: Daimler AG, 70327 Stuttgart (DE)
(72) Erfinder: EHRET, Fritz, 71334 Waiblingen (DE); SCHNITZER, Detlef, 73770 Denkendorf (DE)
(86) Internationale Anmeldenummer: PCT/EP2005/009110
(87) Internationale Veröffentlichungsnummer: WO 2006/021428

(56) Entgegenhaltungen:
- DE-A1- 10 129 149
- DE-A1- 10 146 333
- DE-A1- 19 838 970
- US-A- 5 876 302

## Beschreibung

Die Erfindung betrifft einen Antriebsstrang eines Kraftfahrzeugs nach dem Oberbegriff des Patentanspruchs 1.

Die US 5,876,302 A beschreibt einen Antriebsstrang eines Kraftfahrzeugs mit einer Antriebsmaschine in Form eines Verbrennungsmotors, einem Getriebe und einer Steuerungseinrichtung zur Ansteuerung der Antriebsmaschine. Die Steuerungseinrichtung begrenzt das abgegebene Drehmoment der Antriebsmaschine zum Schutz des Getriebes auf einen ersten Maximalwert oder einen zweiten, größeren Maximalwert. Die Begrenzung auf den zweiten Maximalwert wird durchgeführt, wenn im Getriebe ein direkter Gang eingelegt ist, das Drehmoment also ohne Zwischenschaltung einer Vorgelegewelle von einem Getriebeeingang zu einem Getriebeausgang übertragen wird. Damit können unnötige Rückschaltungen im Getriebe verhindert werden.

Bei Fahrzeugen mit Getrieben, die nur mit Zugkraftunterbrechung schalten können, führt eine Schaltung zu einem Geschwindigkeitsverlust, der nach der Schaltung mit erhöhter Leistung der Antriebsmaschine wieder ausgeglichen werden muss. Damit trägt die Verhinderung von unnötigen Rückschaltungen zu einem geringen Kraftstoffverbrauch bei.

Es ist aber möglich, dass kurz nach der Erhöhung des abgegebenen Drehmoments der Antriebsmaschine das Drehmoment dennoch nicht ausreicht, um die Fahrwiderstände des Kraftfahrzeugs zu überwinden, so dass dann eine Rückschaltung notwendig wird. Damit kann die Erhöhung des Drehmoments statt zu einer Kraftstoffersparnis zu einer Kraftstofferhöhung führen.

Demgegenüber ist es die Aufgabe der Erfindung, einen Antriebsstrang für ein Kraftfahrzeug vorzuschlagen, welcher einen geringen Kraftstoffverbrauch des Kraftfahrzeugs ermöglicht. Erfindungsgemäß wird die Aufgabe durch einen Antriebsstrang mit den Merkmalen des Patentanspruchs 1 gelöst.

Die Steuerungseinrichtung der Antriebsmaschine steht mit einer Fahrbahninformationseinrichtung, welche Informationen über einen Verlauf der Fahrbahn in Fahrtrichtung des Kraftfahrzeugs liefert, in Signalverbindung. Die Fahrbahninformationseinrichtung kann beispielsweise als eine digitale Kamera, eine Infrarotkamera, ein Sender und Empfänger von Radarsignalen oder ein System, welches Informationen einer digitalen Straßenkarte auswertet, ausgeführt sein. Zur Erhöhung der Genauigkeit kann die Fahrbahninformationseinrichtung Signale zur Bestimmung der Position des Kraftfahrzeugs, wie beispielsweise so genannte GPS-Signale, empfangen und verarbeiten.

Die Steuerungseinrichtung ist dazu vorgesehen, einen Wechsel vom ersten auf den zweiten Maximalwert in Abhängigkeit der genannten Informationen über den Verlauf der Fahrbahn durchzuführen. Die Steuerungseinrichtung lässt also eine Erhöhung des abgegebenen Drehmoments der Antriebsmaschine über den ersten Maximalwert in Abhängigkeit der Informationen über den Verlauf der Fahrbahn zu. Die Steuerungseinrichtung kann so vorausschauend entscheiden, ob es aus Kraftstoffverbrauchsgründen vorteilhafter ist, das abgegebene Drehmoment der Antriebsrriaschine zu erhöhen oder im Getriebe herunterzuschalten. Durch die Auswertung der Informationen über den Fahrbahnverlauf ist die Wahrscheinlichkeit, die richtige Entscheidung zu treffen, sehr hoch.

Neben den genannten zwei Maximalwerten kann die Steuerungseinrichtung das abgegebene Drehmoment der Antriebsmaschine auch noch auf weitere, von den zwei Maximalwerten abweichenden Maximalwerten begrenzen. Der Wechsel vom zweiten auf den ersten Maximalwert kann ebenfalls von den genannten Informationen über den Verlauf der Fahrbahn abhängig sein. Das Getriebe kann als ein von einem Fahrzeugführer manuell betätigtes Getriebe oder als ein Automatikgetriebe, beispielsweise in Form eines Getriebes in Planetenbauweise oder ein automatisiertes Zahnräderwechselgetriebe ausgeführt sein. Falls das Getriebe als ein manuelles Getriebe ausgeführt ist, kann der Fahrzeugführer mittels einer von der Steuerungseinrichtung angesteuerten Anzeige zu einer Rückschaltung aufgefordert werden.

In Ausgestaltung der Erfindung ist das Getriebe als ein Automatikgetriebe ausgeführt, welches von der oben genannten Steuerungseinrichtung angesteuert wird. Das Getriebe kann auch von einer weiteren Steuerungseinrichtung angesteuert werden, welche mit der Steuerungseinrichtung der Antriebsmaschine in Signalverbindung steht.

Der Fahrzeugführer kann mittels eines Leistungsstellglieds, beispielsweise in Form eines Fahrpedals, eine Anforderung eines Drehmoments am Ausgang des Getriebes einstellen. Der Fahrzeugführer kann auch eine Anforderung für ein abgegebenes Drehmoment der Antriebsmaschine einstellen, womit auch eine Vorgabe für das Drehmoment am Ausgang des Getriebes gemacht wird. Neben dem Fahrzeugführer können auch weitere Systeme, wie beispielsweise eine Geschwindigkeitsregelanlage, Einfluss auf die Anforderung haben. Bei einer Erhöhung einer Anforderung eines Drehmoments am Ausgang des Getriebes prüft die Steuerungseinrichtung, ob das angeforderte Drehmoment im aktuellen Gang des Getriebes mit einem abgegebenen Drehmoment der Antriebsmaschine, welches größer als der erste und kleiner als der zweite Maximalwert ist, einstellbar ist. Bei dieser Prüfung berücksichtigt die Steuerungseinrichtung die Übersetzung des Getriebes im aktuellen Gang. Weiterhin prüft die Steuerungseinrichtung, ob auf Grund der Informationen über den Verlauf der Fahrbahn zu erwarten ist, dass das notwendige Drehmoment der Antriebsmaschine innerhalb eines Abschnitts der Fahrbahn vor dem Kraftfahrzeug kleiner als der zweite Maximalwert bleibt. Dies ist insbesondere dann der Fall, wenn eine Steigung der Fahrbahn innerhalb des Abschnitts vor dem Kraftfahrzeug um weniger als einen festlegbaren Steigungsdifferenzgrenzwert ansteigt. Der Abschnitt kann beispielsweise 200 - 500 m Fahrbahn umfassen.

Falls beide Prüfungen positive Ergebnisse liefern, begrenzt die Steuerungseinrichtung das abgegebene Drehmoment der Antriebsmaschine auf den zweiten Maximalwert, es findet also ein Wechsel vom ersten auf den zweiten Maximalwert statt. Gleichzeitig stellt die Steuerungseinrichtung das abgegebene Drehmoment der Antriebsmaschine so ein, dass sich das Drehmoment am Ausgang des Getriebes auf den angeforderten Wert erhöht und behält den aktuellen Gang im Getriebe bei.

In Ausgestaltung der Erfindung ist die Steuerungseinrichtung dazu vorgesehen, ein zum Befahren des Abschnitts der Fahrbahn notwendiges Drehmoment der Antriebsmaschine unter Beibehaltung des aktuellen Gangs im Getriebe abzuschätzen und mit dem zweiten Maximalwert zu vergleichen. Dazu wertet die Steuerungseinrichtung die so genannte und allgemein bekannte Fahrwiderstandsgleichung aus, bei welcher ein Kräftegleichgewicht der in Längsrichtung auf das Kraftfahrzeug wirkenden Kräfte aufgestellt wird. Bei dieser Berechnung wird insbesondere die Steigung der Fahrbahn innerhalb des genannten Abschnitts der Fahrbahn berücksichtigt. Auf Grund dieser Abschätzung kann die Steuerungseinrichtung entscheiden, ob innerhalb des genannten Abschnitts trotz des Wechsels auf den zweiten Maximalwert dennoch eine Rückschaltung notwendig wird. In diesem Fall kann die Rückschaltung sofort durchgeführt werden und so im Vergleich mit einer Erhöhung des Drehmoments und anschließender Rückschaltung insgesamt ein geringerer Kraftstoffverbrauch erzielt werden.

In Ausgestaltung der Erfindung ist die Steuerungseinrichtung dazu vorgesehen, in Abhängigkeit des abgegebenen Drehmoments der Antriebsmaschine einen Belastungswert des Getriebes zu ermitteln und abzuspeichern und bei Überschreiten eines Belastungsgrenzwerts keinen Wechsel auf den zweiten Maximalwert mehr zuzulassen. Lange und/oder häufig wirkende hohe Drehmomente am Eingang des Getriebes können das Getriebe so sehr beanspruchen, dass bei einer fortgesetzten Beaufschlagung mit sehr hohen Drehmomenten Schädigungen am Getriebe nicht auszuschließen sind. Der genannte Belastungswert ist ein Maß für die bisherige Belastung des Getriebes. Der Belastungskennwert kann beispielsweise gebildet werden, indem aufsummiert wird, wie oft oder wie lange das abgegebene Drehmoment der Antriebsmaschine den ersten Maximalwert überschritten hat. Insbesondere kann für jeden Gang des Getriebes ein spezifischer Belastungswert ermittelt werden, der die Belastungen des speziellen Gangs kennzeichnet.

Dadurch, dass nach Überschreiten des Belastungsgrenzwerts kein Wechsel auf den zweiten Maximalwert zugelassen wird, wird eine Schädigung des Getriebes durch zu hohe Drehmomente verhindert. Dies ist insbesondere dann wichtig, wenn der Wechsel nicht nur im direkten Gang, sondern auch in anderen Gängen durchgeführt wird.

In Ausgestaltung der Erfindung ist die Steuerungseinrichtung dazu vorgesehen, das abgegebene Drehmoment der Antriebsmaschine nur für eine begrenzte Zeitspanne auf den zweiten Maximalwert zu begrenzen. Die Dauer der Zeitspanne ist insbesondere vom abgegebenen Drehmoment der Antriebsmaschine und/oder von einem Belastungswert des Getriebes abhängig. Die Zeitdauer ist insbesondere umso kürzer, je größer das abgegebene Drehmoment der Antriebsmaschine und/oder der Belastungswert sind. Damit wird eine Schädigung des Getriebes durch zu hohe Drehmomente verhindert.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: einen Antriebsstrang eines Kraftfahrzeugs, wobei eine Steuerungseinrichtung einer Antriebsmaschine mit einer Kamera in Signalverbindung steht,
- Fig. 2a /2b: Darstellungen der zeitlichen Verläufe eines angeforderten Drehmoments am Ausgang des Getriebes, eines abgegebenen Drehmoments der Antriebsmaschine und eines Gangs des Getriebes und
- Fig. 3a /3b: den Verlauf einer Steigung der Fahrbahn in Fahrtrichtung des Kraftfahrzeugs.

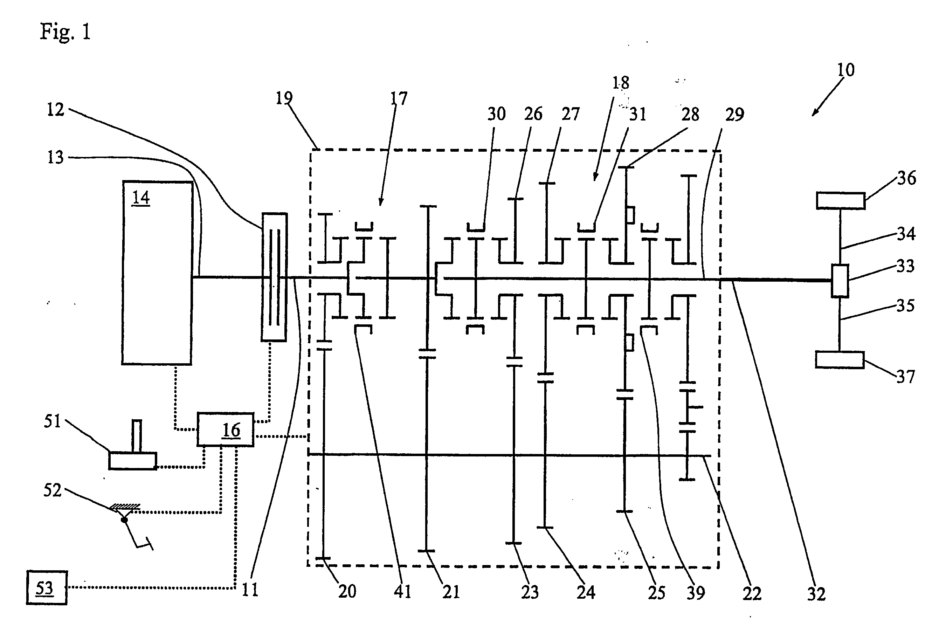

Gemäß Fig. 1 weist ein Antriebsstrang 10 eines nicht dargestellten Kraftfahrzeugs eine Antriebsmaschine 14 auf, welche von einer Steuerungseinrichtung 16 angesteuert wird. Über ein Leistungsstellorgan in Form eines Fahrpedals 52 kann ein Fahrzeugführer Vorgaben für ein abgegebenes Drehmoment der Antriebsmaschine 14 einstellen.

Die Antriebsmaschine 14 kann mittels einer Ausgangswelle 13 und einer Reibungskupplung 12 mit einer koaxial zur Ausgangswelle 13 angeordneten Eingangswelle 11 eines Getriebes 19 in Form eines automatisierten, unsynchronisierten Zahnräderwechselgetriebes verbunden werden. Die Kupplung 12 und das Zahnräderwechselgetriebe 19 werden ebenfalls von der Steuerungseinrichtung 16 angesteuert. Die Steuerungseinrichtung 16 steht dazu in Signalverbindung mit nicht dargestellten Stellgliedern und Sensoren der Kupplung 12 und des Getriebes 19. Damit kann die Steuerungseinrichtung 16 die Kupplung 12 öffnen oder schließen und Gangwechsel im Getriebe 19 durchführen. Die Steuerungseinrichtung 16 ist außerdem mit einem Schalthebel 51 verbunden, mittels welchem der Fahrzeugführer Schaltungen des Getriebes 19 anfordern kann. Alternativ dazu können Schaltungen von einem Ursprungs- in einen Zielgang auch in an sich bekannter Weise von der Steuerungseinrichtung 16 ausgelöst werden. Die Ermittlung des Zielgangs ist dabei unter anderem von der Geschwindigkeit des Kraftfahrzeugs und einem Betätigungsgrad des Fahrpedals 52 durch den Fahrzeugführer abhängig.

Das Getriebe 19 ist als ein so genanntes Zwei-Gruppengetriebe ausgeführt. Drehfest verbunden mit der Getriebeeingangswelle 11 ist ein Vorschaltgetriebe in Form einer Splitgruppe 17 angeordnet. Der Splitgruppe 17 nachgeordnet ist ein Hauptgetriebe 18.

Mittels der Splitgruppe 17 kann die Getriebeeingangswelle 11 über zwei verschiedene Zahnradpaarungen 20, 21 mit einer parallel zur Getriebeeingangswelle 11 angeordneten Vorgelegewelle 22 in Wirkverbindung gebracht werden. Die Zahnradpaarungen 20, 21 weisen eine unterschiedliche Übersetzung auf. Auf der Vorgelegewelle 22 sind verdrehfest Festräder 23, 24, 25 für den 3., 2. und 1. Gang des Hauptgetriebes 18 angeordnet. Die Festräder 23, 24, 25 kämmen jeweils mit zugehörigen Losrädern 26, 27, 28, welche drehbar auf einer koaxial zur Getriebeeingangswelle 11 angeordneten Getriebeausgangswelle 29 angeordnet sind. Das Losrad 26 kann mittels einer Schiebemuffe 30, die Losräder 27 und 28 mittels einer Schiebemuffe 31 verdrehfest und formschlüssig mit der Getriebeausgangswelle 29 verbunden werden.

Eine Schiebemuffe 41 der Splitgruppe 17 und die Schiebemuffen 30, 31, 39 des Hauptgetriebes 18 sind mit den nicht dargestellten Stellgliedern des Getriebes 19 betätigbar. Damit kann eine formschlüssige Verbindung zwischen zugehörigen Schaltelementen und der Getriebeausgangswelle 29 hergestellt oder unterbrochen werden.

Wenn die Getriebeeingangswelle 11 direkt ohne Zwischenschaltung der Vorgelegewelle 22 mit der Getriebeausgangswelle 29 verbunden ist, so ist im Getriebe 19 der direkte Gang eingelegt.

Von der Getriebeausgangswelle 29 wird das gewandelte Drehmoment und die Drehzahl der Antriebsmaschine 14 mittels einer Antriebswelle 32 an ein Achsgetriebe 33 übertragen, welches in an sich bekannter Weise die Drehzahl in gleichen oder unterschiedlichen Anteilen über zwei Abtriebswellen 34, 35 an Antriebsräder 36, 37 überträgt.

Die Steuerungseinrichtung 16 steht in Signalverbindung mit einer Fahrbahninformationseinrichtung in Form einer digitalen Kamera 53, welche einen Abschnitt der Fahrbahn in Fahrrichtung des Kraftfahrzeugs erfasst. Die Kamera 53 ermittelt daraus Informationen über den Verlauf der Fahrbahn, wie beispielsweise eine Steigung oder ein Gefälle, Kurven oder einen Fahrbahnzustand wie beispielsweise Nässe oder Eis. Diese Informationen stellt die Kamera 53 der Steuerungseinrichtung 16 zur Verfügung, welche diese bei der Ansteuerung der Antriebsmaschine 14 und des Getriebes 19 berücksichtigt.

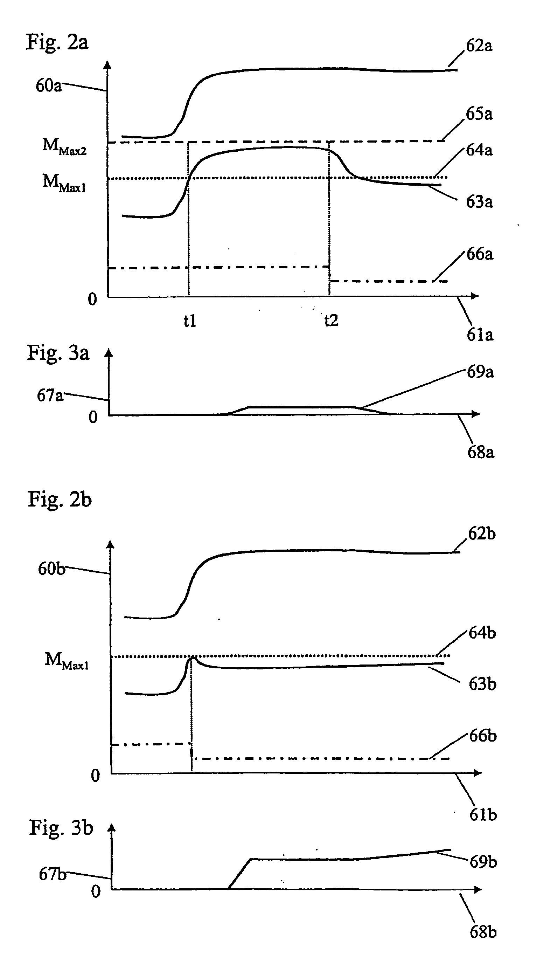

In den Fig. 2a und 2b ist die Reaktion der Steuerungseinrichtung 16 auf eine Erhöhung einer Anforderung eines Drehmoments am Ausgang des Getriebes 19 bei verschiedenen Verläufen der Fahrbahn dargestellt.

In der Fig. 2a sind auf einer Ordinate 60a ein Drehmoment in [Nm] und ein aktueller Gang und auf einer Abszisse 61a die Zeit in [s] aufgetragen. Eine Linie 62a stellt das angeforderte Drehmoment (M_{GAus}) am Ausgang des Getriebes 19 und eine Linie 63a das abgegebene Drehmoment (M_{Ami}) der Antriebsmaschine 14 dar. Eine gepunktete Linie 64a repräsentiert einen ersten Maximalwert (M_{Max1}) und eine gestrichelte Linie 65a einen zweiten Maximalwert (M_{Max2}) für das abgegebene Drehmoment der Antriebsmaschine 14. In einem Normalbetrieb des Kraftfahrzeugs begrenzt die Steuerungseinrichtung 16 das abgegebene Drehmoment der Antriebsmaschine 14 auf den ersten Maximalwert (M_{Max1}). Außerdem stellt eine strich-punktierte Linie 66a den aktuellen Gang des Getriebes 19 dar.

Bis zu einem Zeitpunkt t1 ist M_{GAus} nur so hoch, dass im aktuellen Gang des Getriebes 19 ein M_{Ami}, welches kleiner als M_{Max1} ist, ausreichend ist. Zum Zeitpunkt t1 ist M_{GAus} so weit angestiegen, dass M_{Ami} M_{Max1} erreicht. Zu diesem Zeitpunkt t1 muss die Steuerungseinrichtung 16 entscheiden, ob sie eine weitere Erhöhung von M_{Ami} zulässt und so das geforderte Drehmoment M_{GAus} erreicht wird, oder ob im Getriebe 19 eine Rückschaltung in einen niedrigeren Gang durchgeführt wird. Im Falle einer Rückschaltung ist ein geringeres M_{Ami} notwendig, da die Übersetzung in dem niedrigeren Gang größer ist. Die Steuerungseinrichtung 16 trifft diese Entscheidung in Abhängigkeit von einer Information über die Steigung der Fahrbahn in einem Abschnitt vor dem Kraftfahrzeug.

In Fig. 3a ist ein Verlauf der Steigung (Linie 69a) über der Entfernung vom Kraftfahrzeug innerhalb des betrachteten Abschnitts zum Zeitpunkt t1 dargestellt. Dazu ist auf einer Ordinate 67a eine Steigung in [%] und auf einer Abszisse 68a eine Entfernung in [m] aufgetragen. Die Steuerungseinrichtung 16 bildet für den gesamten Abschnitt eine Differenz zwischen einer aktuellen Steigung und der Steigung der Fahrbahn vor dem Kraftfahrzeug. Diese Differenz ist für den in Fig. 3a dargestellten Verlauf immer kleiner als ein Steigungsdifferenzgrenzwert.

Außerdem prüft die Steuerungseinrichtung 16, ob der angeforderte Wert von M_{GAus} mit einem M_{Ami} kleiner als M_{Max2} erreicht werden kann. Da in diesem Fall beide Bedingungen erfüllt sind, wird der aktuelle Gang im Getriebe beibehalten und M_{Ami} über M_{Max1} hinaus erhöht.

Mit dem Überschreiten von M_{Max1} wird ein in der Steuerungseinrichtung 16 gespeicherter Wert für einen gangabhängigen Belastungswert aktualisiert. Dieser Wert gibt die Zeitdauer an, wie lange in jedem Gang des Getriebes M_{Ami} größer als M_{Max1} war.

Das Überschreiten von M_{Max1} wird nicht für eine unbegrenzte Zeit zugelassen, sondern wird nach einer Zeitspanne, welche zum Zeitpunkt t2 endet, abgebrochen. Die Zeitspanne ist von dem gangspezifischen Belastungswert und dem M_{Ami} während der Überschreitung abhängig. Zum Zeitpunkt t2 wird deshalb eine Rückschaltung im Getriebe 19 durchgeführt, wodurch das M_{Ami} unter M_{Max1} absinkt.

In der Fig. 2b ist derselbe Verlauf von M_{GAus} wie in Fig. 2a dargestellt. Die entsprechenden Größen sind mit entsprechenden Bezugsziffern bezeichnet, wobei "a" durch "b" ersetzt wurde. Zum Zeitpunkt t1 erreicht M_{Ami} ebenfalls M_{Max1}.

Da wie in Fig. 3b dargestellt, die Fahrbahn in dem betrachteten Abschnitt vor dem Kraftfahrzeug stark ansteigt, die beschriebene Differenz also größer als der Steigungsdifferenzgrenzwert ist, wird zum Zeitpunkt t2 eine Rückschaltung im Getriebe 19 durchgeführt. Dadurch sinkt M_{Ami} wieder ab und bleibt kleiner als M_{Max1}. Es findet also keine Umschaltung von M_{Max1}. auf M_{Max2}. statt.

## Patentansprüche

1. Antriebsstrang eines Kraftfahrzeugs mit
- einer Antriebsmaschine (14),
- einem Getriebe (19) und
- einer Steuerungseinrichtung (16) zur Ansteuerung der Antriebsmaschine (14),
wobei die Steuerungseinrichtung (16) dazu vorgesehen ist, ein abgegebenes Drehmoment (M_{Ami}) der Antriebsmaschine (14) zum Schutz des Getriebes (19) auf einen ersten Maximalwert (M_{Max1}) oder einen zweiten, größeren Maximalwert (M_{Max2}) zu begrenzen,
**dadurch gekennzeichnet,**
**dass** die Steuerungseinrichtung (16) mit einer Fahrbahninformationseinrichtung (53), welche Informationen über einen Verlauf der Fahrbahn in Fahrtrichtung des Kraftfahrzeugs liefert, in Signalverbindung steht und die Steuerungseinrichtung (16) dazu vorgesehen ist, einen Wechsel vom ersten (M_{Max1}) auf den zweiten Maximalwert (M_{Max2}) in Abhängigkeit der genannten Informationen über den Verlauf der Fahrbahn durchzuführen.

2. Antriebsstrang nach Anspruch 1,
**dadurch gekennzeichnet,**
**dass** das Getriebe (19) als ein Automatikgetriebe ausgeführt ist und von der Steuerungseinrichtung (16) angesteuert wird und die Steuerungseinrichtung (16) so ausgeführt ist, dass
- bei einer Erhöhung einer Anforderung eines Drehmoments (M_{GAus}) am Ausgang des Getriebes (19) geprüft wird,
- ob das angeforderte Drehmoment (M_{GAus}) im aktuellen Gang des Getriebes (19) mit einem abgegebenen Drehmoment (M_{Ami}) der Antriebsmaschine (14), welches größer als der erste (M_{Max1}) und kleiner als der zweite Maximalwert (M_{Max2}) ist, einstellbar ist und
- und ob auf Grund der Informationen über den Verlauf der Fahrbahn zu erwarten ist, dass das notwendige Drehmoment der Antriebsmaschine (14) innerhalb eines Abschnitts der Fahrbahn vor dem Kraftfahrzeug kleiner als der zweite Maximalwert (M_{Max2}) bleibt und
- im Falle einer positiven Prüfung
- das abgegebene Drehmoment (M_{Ami}) der Antriebsmaschine (14) auf den zweiten Maximalwert (M_{Max2}) begrenzt wird,
- das abgegebene Drehmoment (M_{Ami}) der Antriebsmaschine (14) so eingestellt wird, dass sich das Drehmoment (M_{GAus}) am Ausgang des Getriebes (19) auf den angeforderten Wert erhöht und
- der aktuelle Gang des Getriebes (19) beibehalten wird.

3. Antriebsstrang nach Anspruch 2,
**dadurch gekennzeichnet,**
**dass** die Steuerungseinrichtung (16) dazu vorgesehen ist, zu erwarten, dass das notwendige Drehmoment (M_{Ami}) der Antriebsmaschine (14) kleiner als der zweite Maximalwert (M_{Max2}) bleibt, wenn eine Steigung der Fahrbahn innerhalb des Abschnitts vor dem Kraftfahrzeug gegenüber einer aktuellen Steigung um weniger als einen festlegbaren Steigungsdifferenzgrenzwert ansteigt.

4. Antriebsstrang nach Anspruch 2,
**dadurch gekennzeichnet,**
**dass** die Steuerungseinrichtung (16) dazu vorgesehen ist, ein zum Befahren des Abschnitts der Fahrbahn notwendiges Drehmoment (M_{Ami}) der Antriebsmaschine (14) unter Beibehaltung des aktuellen Gangs im Getriebe (19) abzuschätzen und mit dem zweiten Maximalwert (M_{Max2}) zu vergleichen.

5. Antriebsstrang nach einem der vorhergehenden Ansprüche, **dadurch gekennzeichnet,**
**dass** die Steuerungseinrichtung (16) dazu vorgesehen ist, in Abhängigkeit des abgegebenen Drehmoments (M_{Ami}) der Antriebsmaschine (14) einen Belastungswert des Getriebes (19) zu ermitteln und abzuspeichern und bei Überschreiten eines Belastungsgrenzwerts keinen Wechsel auf den zweiten Maximalwert (M_{Max2}) mehr zuzulassen.

6. Antriebsstrang nach Anspruch 5,
**dadurch gekennzeichnet,**
**dass** die Steuerungseinrichtung (16) dazu vorgesehen ist; mehrere gangabhängige Belastungswerte zu ermitteln und abzuspeichern und bei Überschreiten eines zugehörigen Belastungsgrenzwerts durch einen gangabhängigen Belastungswert keinen Wechsel auf den zweiten Maximalwert (M_{Max2}) mehr zuzulassen, wenn ein dem genannten Belastungswert zugeordneter Gang im Getriebe (19) eingelegt ist.

7. Antriebsstrang nach einem der vorhergehenden Ansprüche,
**dadurch gekennzeichnet,**
**dass** die Steuerungseinrichtung (16) dazu vorgesehen ist, das abgegebene Drehmoment (M_{Ami}) der Antriebsmaschine (14) nur für eine begrenzte Zeitspanne auf den zweiten Maximalwert (M_{Max2}) zu begrenzen.

8. Antriebsstrang nach Anspruch 7,
**dadurch gekennzeichnet,**
**dass** die Steuerungseinrichtung (16) dazu vorgesehen ist, die genannte Zeitspanne in Abhängigkeit vom abgegebenen Drehmoment (M_{Ami}) der Antriebsmaschine (14) zu bestimmen.

9. Antriebsstrang nach Anspruch 7 oder 8,
**dadurch gekennzeichnet,**
**dass** die Steuerungseinrichtung (16) dazu vorgesehen ist, die genannte Zeitspanne in Abhängigkeit von einem Belastungswert des Getriebes (19) zu bestimmen.

## Claims

1. Drive train of a motor vehicle, comprising
- an engine (14),
- a gearbox (19) and
- a control unit (16) for the control of the engine (14),
wherein the control unit (16) is designed to limit an output torque (M_{Ami}) of the engine (14) for the protection of the gearbox (19) to a first maximum value (M_{Max1}) or to a higher second maximum value (M_{Maxi12}),
**characterised in that**
the control unit (16) is in signal connection with a road information device (53) supplying information on the layout of the road in the direction of travel of the motor vehicle, and **in that** the control unit (16) is designed to change from the first maximum value (M_{Maxi1}) to the second maximum value (M_{Maxi12}) in dependence on the said information on the layout of the road.

2. Drive train according to claim 1,
**characterised in that**
the gearbox (19) is designed as an automatic gearbox and is controlled by the control unit (16), and **in that** the control unit (16) is designed such that
- at an increase of a torque demand (M_{Gaus}) at the output of the gearbox (19) a check is performed
- whether the demanded torque (M_{Gaus}) can be set in the current gear of the gearbox (19) with an output torque (M_{Ami}) of the engine (14) which is higher than the first maximum value (M_{Maxi1}) and lower than the second maximum value (M_{Maxi12}), and
- it has to be expected on the basis of the information on the layout of the road that the required torque of the engine (14) remains lower than the second maximum value (M_{Maxi12}) within a section of the road, and **in that**
- in the case of a positive check result
- the output torque (M_{Ami}) of the engine (14) is limited to the second maximum value (M_{Maxi12}),
- the output torque (M_{Ami}) of the engine (14) is set such that the torque (M_{Gaus}) at the output of the gearbox (19) increases to the demanded value, and
- the current gear of the gearbox (19) is maintained.

3. Drive train according to claim 2,
**characterised in that**
the control unit (16) is designed to expect that the required torque (M_{Ami}) of the engine (14) remains lower than the second maximum value (M_{Maxi12}) if an uphill grade of the road within the section in front of the motor vehicle increases by less than a definable gradient differential limit value relative to a current uphill grade.

4. Drive train according to claim 2,
**characterised in that**
the control unit (16) is designed to estimate a torque (M_{Ami}) of the engine (14) required for driving along the section of the road while maintaining the current gear in the gearbox (19) and to compare it to the second maximum value (M_{Maxi12).}

5. Drive train according to any of the preceding claims,
**characterised in that**
the control unit (16) is designed to determine and store, in dependence of the output torque (M_{Ami}) of the engine (14), a load value of the gearbox (19) and to prevent any further change to the second maximum value (M_{Maxi12}) if a load limit value is exceeded.

6. Drive train according to claim 5,
**characterised in that**
the control unit (16) is designed to determine and store a plurality of gear-dependent load values and, if an associated load limit value is exceeded by a gear-dependent load value, to prevent any further change to the second maximum value (M_{Maxi12}) if a gear assigned to the said load value is engaged in the gearbox (19).

7. Drive train according to any of the preceding claims,
**characterised in that**
the control unit (16) is designed to limit the output torque (M_{Ami}) of the engine (14) to the second maximum value (M_{Maxi12}) for a limited period of time only.

8. Drive train according to claim 7,
**characterised in that**
the control unit (16) is designed to determine the said period of time in dependence on the output torque (M_{Ami}) of the engine (14).

9. Drive train according to claim 7 or 8,
**characterised in that**
the control unit (16) is designed to determine the said period of time in dependence on a load value of the gearbox (19).

## Revendications

1. Ligne de transmission d'entraînement d'un véhicule automobile, comprenant
- une machine ou un moteur d'entraînement (14),
- une boite de vitesses (19), et
- un dispositif de commande (16) pour commander le moteur d'entraînement (14),
le dispositif de commande (16) étant conçu, en vue de la protection de la boite de vitesses (19), pour limiter un couple (M_{Ami}) délivré par le moteur d'entraînement (14) à une première valeur maximale (M_{Max1}) ou bien à une deuxième valeur maximale (M_{Max2}) plus grande,
**caractérisée**
**en ce que** le dispositif de commande (16) est en liaison de transmission de signal avec un dispositif d'informations de chaussée (53), qui fournit des informations relatives au tracé de la chaussée dans la direction de marche du véhicule automobile, et le dispositif de commande (16) est prévu pour effectuer un changement de la première (M_{Max1}) à la deuxième valeur maximale (M_{Max2}) en fonction des informations citées relatives au tracé de la chaussée.

2. Ligne de transmission d'entraînement selon la revendication 1,
**caractérisée**
**en ce que** la boite de vitesse (19) est réalisée sous la forme d'une boite de vitesses automatique et est commandée par le dispositif de commande (16), et le dispositif de commande (16) est réalisé de façon telle, que
- dans le cas d'une augmentation d'une demande de couple (M_{GAus}) à la sortie de la boite de vitesses (19), on effectue le test suivant,
- à savoir si le couple (M_{GAus}) demandé peut être réglé dans le rapport actuel de la boite de vitesses (19) avec un couple (M_{Ami}) délivré par le moteur d'entraînement (14), qui est supérieur à la première (M_{Max1}) et inférieur à la deuxième valeur maximale (M_{Max2}), et
- si sur la base des informations relatives au tracé de la chaussée, il est à prévoir que le couple nécessaire du moteur d'entraînement (14) reste inférieur à la deuxième valeur maximale (M_{Max2}) à l'intérieur d'un tronçon de la chaussée devant le véhicule automobile, et
- dans le cas d'un test positif
- le couple (M_{Ami}) délivré par le moteur d'entraînement (14) est limité à la deuxième valeur maximale (M_{Max2}),
- le couple (M_{Ami}) délivré par le moteur d'entraînement (14) est réglé de façon à ce que le couple (M_{GAus}) à la sortie de la boite de vitesses (19) augmente à la valeur demandée, et
- le rapport actuel de la boite de vitesses (19) reste conservé.

3. Ligne de transmission d'entraînement selon la revendication 2,
**caractérisée**
**en ce que** le dispositif de commande (16) est conçu pour prévoir que le couple (M_{Ami}) nécessaire du moteur d'entraînement (14) reste inférieur à la deuxième valeur maximale (M_{Max2}) lorsqu'une pente de la chaussée, à l'intérieur dudit tronçon devant le véhicule automobile, augmente par rapport à une pente actuelle de moins d'une valeur limite de différence de pente pouvant être prédéfinie.

4. Ligne de transmission d'entraînement selon la revendication 2,
**caractérisée**
**en ce que** le dispositif de commande (16) est conçu pour estimer un couple (M_{Ami}) du moteur d'entraînement (14) nécessaire à la circulation sur ledit tronçon de la chaussée en conservant le rapport actuel dans la boite de vitesses (19), et le comparer avec la deuxième valeur maximale (M_{Max2}).

5. Ligne de transmission d'entraînement selon l'une des revendications précédentes,
**caractérisée**
**en ce que** le dispositif de commande (16) est conçu pour déterminer, en fonction du couple (M_{Ami}) délivré par le moteur d'entraînement (14), une valeur de charge de la boite de vitesses (19) et la mémoriser, et pour, en cas de dépassement d'un seuil de valeur de charge, ne plus autoriser de changement vers la deuxième valeur maximale (M_{Max2}).

6. Ligne de transmission d'entraînement selon la revendication 5,
**caractérisée**
**en ce que** le dispositif de commande (16) est conçu pour déterminer plusieurs valeurs de charge en fonction du rapport et les mémoriser, et pour, lorsqu'une une valeur de charge fonction du rapport dépasse un seuil de valeur de charge associé, ne plus autoriser de changement vers la deuxième valeur maximale (M_{Max2}) lorsqu'un rapport associé à la valeur de charge citée est enclenché dans la boite de vitesses (19).

7. Ligne de transmission d'entraînement selon l'une des revendications précédentes,
**caractérisée**
**en ce que** le dispositif de commande (16) est conçu pour ne limiter le couple (M_{Ami}) délivré par le moteur d'entraînement (14) à la deuxième valeur maximale (M_{Max2}), que pour un intervalle de temps limité.

8. Ligne de transmission d'entraînement selon la revendication 7,
**caractérisée**
**en ce que** le dispositif de commande (16) est conçu pour définir l'intervalle de temps cité, en fonction du couple (M_{Ami}) délivré par le moteur d'entraînement (14).

9. Ligne de transmission d'entraînement selon la revendication 7 ou 8,
**caractérisée**
**en ce que** le dispositif de commande (16) est conçu pour définir l'intervalle de temps cité, en fonction d'une valeur de charge de la boite de vitesses (19).
